# EUROPÄISCHE PATENTSCHRIFT

(11) **EP 3 820 912 B1**
(45) Veröffentlichungstag und Bekanntmachung des Hinweises auf die Patenterteilung: **13.09.2023**
(21) Anmeldenummer: 19742317.1
(22) Anmeldetag: 10.07.2019
(51) Int. Cl.: C08F 8/00, C08G 18/83, C08G 63/685, C08G 63/91, C08G 65/48, C08G 69/48

(54) **FUNKTIONALISIERTE POLYMERE**
FUNCTIONALIZED POLYMERS
POLYMÈRES FONCTIONNALISÉS

(30) Priorität: 13.07.2018 DE 102018211720
(43) Veröffentlichungstag der Anmeldung: 19.05.2021
(73) Patentinhaber: Fraunhofer-Gesellschaft zur Förderung der angewandten Forschung e.V., 80686 München (DE)
(72) Erfinder: ESCHIG, Steven, 38106 Braunschweig (DE); FRIEBEL, Stefan, 38173 Evessen (DE); SCHMIDT, Philipp, 38116 Braunschweig (DE)
(74) Vertreter: Maiwald GmbH
(86) Internationale Anmeldenummer: PCT/EP2019/068487
(87) Internationale Veröffentlichungsnummer: WO 2020/011826

(56) Entgegenhaltungen:
- DE-A1- 4 104 319
- JULIA KÖTTERITZSCH ET AL: "One-Component Intrinsic Self-Healing Coatings Based on Reversible Crosslinking by Diels-Alder Cycloadditions", MACROMOLECULAR CHEMISTRY AND PHYSICS., Bd. 214, Nr. 14, 25. Juli 2013 (2013-07-25), Seiten 1636-1649, XP055629226, DE ISSN: 1022-1352, DOI: 10.1002/macp.201200712 in der Anmeldung erwähnt

## Beschreibung

Die vorliegende Erfindung betrifft funktionalisierte Polymere, die kovalent gebundene Diels-Alder-Addukte enthalten, sowie Verfahren zur Herstellung dieser Polymere.

Polymeren Werkstoffen werden zur Einstellung von Materialeigenschaften wie Flexibilität, Verarbeitbarkeit, antimikrobielle und biozide Wirkung, Hydrophobie, Hydrophilie und Selbstheilung spezielle Additive zugesetzt, da Polymere in ihrer reinen Form meist nicht das für eine spezifische Anwendung erforderliche Eigenschaftsprofil zeigen. Welche Additive dabei zugesetzt werden, ist von verschiedenen Rahmenbedingungen wie Polymertyp, der geplanten Anwendung oder auch den vorherrschenden Umgebungsbedingungen abhängig.

Die Wirkstoffe werden üblicherweise dem kompletten Polymer beigemengt. Dies führt dazu, dass sich die Additive im gesamten Polymer gleichmäßig verteilen. Da beispielsweise die Wirksamkeit biozider Wirkstoffe von ihrer lokalen Konzentration abhängig ist, muss dem Polymer auch eine entsprechende Menge an Additiv zugefügt werden. Sowohl im Inneren des Polymers als auch in der äußeren Grenzschicht sind ähnliche Mengen an Wirkstoffen vorhanden. Da aber die Wirkung nur an der Oberfläche des polymeren Werkstoffs benötigt wird, sind die Wirkstoffe im Inneren des Polymers überflüssig.

Diese Methode hat außerdem den Nachteil, dass die zugesetzten Additive unkontrolliert freigesetzt werden können. Mit der Zeit können diese ausgewaschen werden, die Materialien verlieren ihre Funktion und die Additive gelangen in die Umwelt.

Der Ansatz, das Additiv dem fertigen Polymer zuzugeben, wird beispielsweise von B.D. Kaylon et al., Am. J. Infect. Control., 2001, 29, 124-125; C.H. Ho et al., Adv. Mater., 2004, 16, 957; und J.C. Tiller et al., J. Control Release, 2005, 103, 355-367 und in WO 2010/064274 A1 beschrieben.

Weiterhin ist bekannt, bei der Herstellung der Polymere spezielle Monomere einzusetzen, die direkt in das Polymer eingebaut werden und die entsprechende Funktion einbringen. Hierzu zählen z.B. fluorierte Polymere oder Organosilicone zur Generierung hydrophober oder biozider Eigenschaften.

Die Herstellung von Polymeren, in denen die funktionellen Gruppen kovalent an das Polymer angebunden sind, wird beispielsweise von J.C. Tiller et al., Proc. Natl. Acad. Sci. USA, 2001, 98, 5981; J. Lin et al., Biotechnolog. Prog., 2002, 18, 1082-1086 und J.-H. Li et al., J. Appl. Polym. Sci., 2014, 131 (20), 40955, beschrieben.

Diese Methode bietet den Vorteil, dass die entsprechenden Wirkstoffe fest im Polymer eingebunden sind. Eine Auswaschung und ein damit verbundener Funktionsverlust werden vermieden. Nachteile ergeben sich hinsichtlich des Recyclings. Um die Polymere wiederverwerten zu können, müssen die funktionellen Einheiten entfernt werden, andernfalls kann es zu Kreuzkontaminierungen kommen. Die Entfernung dieser funktionellen Einheiten ist entweder sehr aufwendig oder gar nicht möglich. Außerdem kann die Synthese solcher Polymere recht teuer sein. Eine Anwendung findet daher hauptsächlich im medizinischen Bereich statt.

Weiterhin ist bekannt, für die Herstellung selbstheilender polymerer Werkstoffe die reversible Diels-Alder Reaktion zwischen einer Furan- und einer cyclischen Imidverbindung (z.B. einer Maleimid-Verbindung) zu nutzen, um Polymerketten reversibel zu vernetzen.

Die dem Fachmann bekannte thermoreversible Diels-Alder-Reaktion zwischen einer Furanverbindung 1 und einer Maleimidverbindung 2 unter Bildung eines Diels-Alder-Addukts 3 wird durch das nachfolgende Reaktionsschema veranschaulicht:

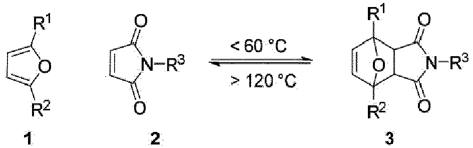

Bei dieser Reaktion handelt es sich um eine Gleichgewichtsreaktion, deren Gleichgewicht sich temperaturgesteuert gezielt verschieben lässt. Unterhalb 60°C liegt das Gleichgewicht auf der Seite des Diels-Alder-Addukts, oberhalb von 120°C auf der Seite der Furan- und Maleimid-Verbindung.

Für die reversible Vernetzung von Polymerketten werden beispielsweise Furanfunktionalisierte Polymere mit Bis-, Tri- oder Polymaleimiden (d.h. Moleküle mit zwei, drei oder mehreren Maleimideinheiten) vernetzt. Bei Beschädigungen (z.B. Risse oder Materialbrüche) werden durch Erwärmung diese Vernetzungen gelöst, die Polymerketten könnten sich neu ordnen und bei Abkühlung erneut vernetzen. Dies ermöglicht es, Beschädigungen im Material durch Bindungsumordnungen zu reparieren.

Die Verwendung thermoreversibler Diels-Alder-Reaktionen für die Herstellung selbstheilender Polymerwerkstoffe wird beispielsweise von A. Gandini et al., Eur. Polymer J. 2008, 44, 4029-4036; A. Gandini, Prog. Polym Sci. 2013, 38, 1-29; J. Kötteritzsch, Macromol. Chem. Phys. 2013, 214, 1636-1649; J. Kötteritzsch et al., Polymer 2015, 69, 321-329; D. H. Turkenburg et. al., J. Appl. Polymer Sci 2017, 134, (26), 44972; und D. H. Turkenburg et al., Prog. Org. Coat. 2017, 111, 38-46; sowie in WO 2017/091284 A1; US 2015/337147 A1; US 2014/357783 A1 und EP 3296347 A1 beschrieben.

DE 41 04 319 A1 beschreibt eine thermoplastisch verarbeitbare Polymermasse auf Polymethacrylatbasis, die aus einem Vinylpolymerisat und einer Bismaleinimidverbindung gebildet wird.

J. Kötteritzsch et al., Macromol. Chem. Phys., 2013, 214, S. 1636-1649, beschreiben Terpolymere, die funktionelle Einheiten für eine reversible Vernetzung durch Diels-Alder-Cycloaddition enthalten.

Eine Aufgabe der vorliegenden Erfindung ist die Bereitstellung eines funktionalisierten Polymers, das sich effizient recyclen lässt, eine unkontrollierte Freisetzung von Additiven vermeidet und bei Bedarf eine selektive Funktionalisierung nur auf der Oberfläche des polymeren Werkstoffs ermöglicht.

Gelöst wird die Aufgabe durch ein funktionalisiertes Polymer, das mindestens ein kovalent gebundenes Diels-Alder-Addukt enthält, wobei das Diels-Alder-Addukt eine Furan- und eine cyclische Imid-Komponente aufweist und die Furan- oder die cyclische Imid-Komponente einen funktionellen Organylrest, dessen Molmasse weniger als 800 g/mol beträgt, enthält, wobei
der funktionelle Organylrest eine quartäre Ammonium-, eine Carbonsäure- oder Carboxylat-, eine Sulfonamid-, eine Hydroxyl- oder eine Amin-Gruppe enthält oder ein C₂₋₂₂-Alkylrest ist,
das Diels-Alder-Addukt über die Furan-Komponente kovalent an das Polymer gebunden ist und die cyclische Imid-Komponente den funktionellen Organylrest enthält; oder
das Diels-Alder-Addukt über die cyclische Imid-Komponente kovalent an das Polymer gebunden ist und die Furan-Komponente den funktionellen Organylrest enthält.

Durch den funktionellen Organylrest der Furan- oder der cyclischen Imid-Komponente des Diels-Alder-Addukts kann das Polymer gezielt mit einer bestimmten Funktion oder Wirkung, z.B. einer bioziden, hydrophoben oder hydrophilen Wirkung oder einer Easy-to-Clean-Wirkung versehen werden.

Da das den funktionellen Organylrest aufweisende Diels-Alder-Addukt kovalent an das Polymer gebunden ist, wird eine unkontrollierte Freisetzung von Additiven vermieden. Andererseits lässt sich das Diels-Alder-Addukt bei Bedarf, z.B. beim Recycling des Polymers, thermisch spalten. Durch diese kontrolliert ablaufende Spaltung des Diels-Alder-Addukts kann die den funktionellen Organylrest tragende Komponente (die Furan- oder die cyclische Imid-Komponente) vom Polymer abgelöst werden. Das Polymerrückgrat bleibt hierbei erhalten und enthält weiterhin eine kovalent gebundene Furan- oder cyclische Imid-Komponente. Durch eine Diels-Alder-Reaktion dieser verbliebenen Komponente (z.B. der Furan-Komponente) mit dem geeigneten Reaktionspartner (z.B. einer Maleimid-Verbindung mit funktionellem Organylrest) kann erneut funktionalisiert werden.

Bei dem cyclischen Imid handelt es sich beispielsweise um ein Maleimid oder ein Citraconimid.

Wie nachfolgend noch eingehender beschrieben wird, kann das funktionalisierte Polymer hergestellt werden, indem beispielsweise eine Furanverbindung (alternativ: eine cyclische Imidverbindung) kovalent an ein Ausgangspolymer gebunden wird und dieses Furan-haltige (oder Imid-haltige) Polymer anschließend mit einer cyclischen Imid-Verbindung (alternativ: einer Furan-Verbindung), die den funktionellen Organylrest enthält, in Kontakt gebracht wird. Über eine Diels-Alder-Reaktion bildet sich ein Diels-Alder-Addukt, das über seine Furan-Komponente (alternativ: seine cyclische Imid-Komponente) kovalent an das funktionalisierte Polymer gebunden ist. Wenn bereits das Furan-haltige (alternativ: das Imid-haltige) Polymer als Beschichtung auf ein Substrat aufgebracht und diese Beschichtung mit einer Lösung, die die cyclische Imidverbindung (alternativ: die Furanverbindung) enthält, in Kontakt gebracht wird, so bildet sich das funktionalisierte Polymer im Wesentlichen nur an der Oberfläche der Beschichtung. Somit wird eine selektive Funktionalisierung nur auf der Oberfläche des polymeren Werkstoffs ermöglicht.

Bevorzugt weist der funktionelle Organylrest eine Molmasse von weniger als 600 g/mol, bevorzugter weniger als 400 g/mol auf.

Bevorzugt liegt der funktionelle Organylrest in der cyclischen Imid-Komponente des Diels-Alder-Addukts vor. In einer bevorzugten Ausführungsform ist der funktionelle Organylrest an das Imid-Stickstoffatom der cyclischen Imid-Komponente gebunden.

Der funktionelle Organylrest ist beispielsweise ein biozider Rest (d.h. ein Rest, der sich aus einer Verbindung mit bioziden Eigenschaften ableitet), ein hydrophiler Rest oder ein hydrophober Rest.

Der funktionelle Organylrest enthält eine quartäre Ammoniumgruppe (z.B. -[N(C₁₋₂-Alkyl)₃]⁺), eine Carbonsäure- oder Carboxylatgruppe (d.h. -COOH oder -COO⁻), eine Sulfonamidgruppe (z.B. -SO₂-NH-R, wobei R C₁₋₄-Alkyl, bevorzugter C₁₋₂-Alkyl, oder Benzyl ist), eine Amingruppe, eine Hydroxylgruppe oder eine Kombination von mindestens zwei dieser Gruppen oder ist ein C₂₋₂₂-Alkylrest.

Die oben beschriebenen Gruppen können beispielsweise über eine bivalente Linkereinheit oder auch direkt an das Stickstoffatom der Imidgruppe der Maleimid-Komponente gebunden sein. Die bivalente Linkereinheit ist beispielsweise -(C₁₋₁₀-Alkylen)ₐ-(Phenylen)_{b}-(C₁₋₁₀-Alkylen)_{c}-, wobei a 0 oder 1 ist, b 0 oder 1 ist, c 0 oder 1 ist, unter der Maßgabe, dass a+b+c ≥ 1 ist. Die C₁₋₁₀-Alkylen- und Phenylen-Gruppen können substituiert oder unsubstituiert sein. Optional kann die C₁₋₁₀-Alkylen-Gruppe durch ein oder mehrere Heteroatome (z.B. ein Sauerstoffatom) oder mindestens eine funktionelle Gruppe (z.B. eine Ester- oder Amid-Gruppe) unterbrochen sein.

Sofern die Furan-Komponente den funktionellen Organylrest aufweist, kann die oben beschriebene Gruppe direkt oder über eine bivalente Linkereinheit an die Furan-Komponente (genauer: an eines der Kohlenstoffatome des Furan-Rings der Furan-Komponente) gebunden sein. Die bivalente Linkereinheit ist beispielsweise -(C₁₋₁₀-Alkylen)ₐ-(Phenylen)_{b}-(C₁₋₁₀-Alkylen)_{c}-, wobei a 0 oder 1 ist, b 0 oder 1 ist, c 0 oder 1 ist, unter der Maßgabe, dass a+b+c ≥ 1 ist. Die C₁₋₁₀-Alkylen- und Phenylen-Gruppen können substituiert oder unsubstituiert sein. Optional kann die C₁₋₁₀-Alkylen-Gruppe durch ein oder mehrere Heteroatome (z.B. ein Sauerstoffatom) oder mindestens eine funktionelle Gruppe (z.B. eine Ester- oder Amid-Gruppe) unterbrochen sein.

Der funktionelle Organylrest ist beispielsweise ein Alkyl- (z.B. ein C₁₋₂₂-Alkyl), Aryl- (z.B. Phenyl), ein Aralkyl- oder ein Alkaryl-Rest, der mindestens eine Amingruppe, eine quartäre Ammoniumgruppe, eine Hydroxylgruppe, eine Carbonsäure- oder Carboxylatgruppe oder eine Sulfonamidgruppe aufweist.

Soll der funktionelle Organylrest dem Polymer eine hydrophobe Wirkung oder eine Easy-to-Clean-Wirkung verleihen, kann als funktioneller Organylrest ein C₂₋₂₂-Alkylrest (d.h. -CₙH₂ₙ₊₁, wobei n=2-22), bevorzugter ein C₁₂₋₂₂-Alkylrest, noch bevorzugter ein C₁₄₋₁₈-Alkylrest (d.h. -CₙH₂ₙ₊₁, wobei n=12-22, noch bevorzugter n=14-18 ist) verwendet werden. Der Alkylrest kann linear oder verzweigt sein.

Soll der funktionelle Organylrest dem Polymer eine hydrophile Wirkung verleihen, kann als funktioneller Organylrest beispielsweise ein C₁₋₁₈-Alkylrest, bevorzugter ein C₁₋₇-Alkylrest, der mindestens eine polare oder ionische funktionelle Gruppe aufweist, verwendet werden. Als geeignete polare oder ionische Gruppen können eine Amin-, Ammonium-, Hydroxyl-, Carbonsäure- oder Carboxylat-Gruppe genannt werden. Der funktionelle Organylrest lässt sich beispielsweise durch folgende chemische Formel wiedergeben:

-CₙH₂ₙ-X

wobei
n 1-18, bevorzugter 1-7 ist und
X eine Amin-, Ammonium-, Hydroxyl-, Carbonsäure- oder Carboxylat-Gruppe ist.

Soll der funktionelle Organylrest dem Polymer eine biozide Wirkung verleihen, enthält der funktionelle Organylrest bevorzugt mindestens eine quartäre Ammoniumgruppe (z.B. -[N(C₁₋₂-Alkyl)₃]⁺) oder mindestens eine Sulfonamidgruppe (z.B. -SO₂-NH-R, wobei R C₁₋₄-Alkyl, bevorzugter C₁₋₂-Alkyl, oder Benzyl ist). Der funktionelle Organylrest ist beispielsweise

-CₙH₂ₙ-[N(C₁₋₂-Alkyl)₃]⁺

wobei
n 1-9, bevorzugter 1-5 ist.
oder

-(L)ₘ-SO₂-NH-R

wobei
R C₁₋₄-Alkyl, bevorzugter C₁₋₂-Alkyl, oder Benzyl ist,
L eine bivalente Linkereinheit ist, die folgende Formel aufweist:

   -(C₁₋₁₀-Alkylen)ₐ-(Phenylen)_{b}-(C₁₋₁₀-Alkylen)_{c}-

   wobei a 0 oder 1 ist, b 0 oder 1 ist, c 0 oder 1 ist, unter der Maßgabe, dass a+b+c ≥ 1 ist, und
   m 0 oder 1 ist.

Die C₁₋₁₀-Alkylen- und Phenylen-Gruppen der bivalenten Linkereinheit L können substituiert oder unsubstituiert sein. Optional kann die C₁₋₁₀-Alkylen-Gruppe durch ein oder mehrere Heteroatome (z.B. ein Sauerstoffatom) oder mindestens eine funktionelle Gruppe (z.B. eine Ester- oder Amid-Gruppe) unterbrochen sein.

Bei dem funktionalisierten Polymer, an das das Diels-Alder-Addukt kovalent gebunden ist, handelt es sich beispielsweise um ein Polyacrylat, ein Polymethacrylat, einen Polyester, ein Polyurethan, einen Polyharnstoff, ein Polyamid, ein Polyesteramid oder einen Polyether.

Bevorzugt erfolgt die kovalente Bindung des Diels-Alder-Addukts an das funktionalisierte Polymer über die Furan-Komponente.

Das funktionalisierte Polymer enthält das kovalent gebundene Diels-Alder-Addukt beispielsweise in endständiger (d.h. terminaler) Position. Wie nachfolgend noch eingehender beschrieben, kann hierfür beispielsweise zunächst ein Ausgangspolymer hergestellt werden, das in terminaler Position reaktive Gruppen aufweist (z.B. ein NCO-terminiertes Polyurethan). Anschließend werden diese terminalen reaktiven Gruppen mit einer Furanverbindung umgesetzt, gefolgt von der Umsetzung der terminal an das Polymer gebundenen Furanverbindung mit einer den funktionellen Organylrest aufweisenden cyclischen Imidverbindung (z.B. einer Maleimidverbindung), so dass ein funktionalisiertes Polymer mit endständig gebundenen Diels-Alder-Addukten erhalten wird.

Weiterhin ist es im Rahmen der vorliegenden Erfindung möglich, dass die kovalente Bindung des Diels-Alder-Addukts an das funktionalisierte Polymer über eine Seitenkette des Polymers erfolgt. Wie nachfolgend noch eingehender beschrieben, kann hierfür beispielsweise zunächst ein Ausgangspolymer hergestellt werden, das reaktive Monomereinheiten (d.h. Monomere, die auch nach ihrem Einbau in das Polymer noch reaktive Gruppen wie C=C-Doppelbindungen oder funktionelle Gruppen aufweisen) enthält. Anschließend werden diese reaktiven Monomereinheiten des Ausgangspolymers mit einer Furanverbindung umgesetzt, gefolgt von der Umsetzung der über Seitenketten an das Polymer gebundenen Furanverbindung mit einer den funktionellen Organylrest aufweisenden cyclischen Imidverbindung (z.B. einer Maleimidverbindung). Alternativ ist es auch möglich, für die Herstellung eines Ausgangspolymers eine Furanverbindung als Monomer (optional zusammen mit weiteren Monomerverbindungen) einzusetzen, die einen Substituenten mit einer polymerisierbaren Gruppe aufweist (z.B. Furfuryl(meth)acrylat). In dem dabei erhaltenen Ausgangspolymer ist die Furanverbindung über Seitenketten an die Polymerkette gebunden. Anschließend erfolgt die Umsetzung der über Seitenketten an das Polymer gebundenen Furanverbindung mit einer den funktionellen Organylrest aufweisenden cyclischen Imidverbindung (z.B. einer Maleimid-Verbindung).

Weiterhin ist es im Rahmen der vorliegenden Erfindung möglich, dass das Diels-Alder-Addukt über seine Furan-Komponente direkt in die Polymerhauptkette eingebunden ist. Wie nachfolgend noch eingehender beschrieben, kann hierfür beispielsweise eine Furanverbindung, die zwei funktionelle Gruppen aufweist (z.B. zwei Hydroxylgruppen wie 2,5-Bishydroxymethylfuran), mit einer oder mehreren bifunktionalen Verbindungen (z.B. einem Diol und/oder einer Dicarbonsäure) polymerisiert werden.

Das Diels-Alder-Addukt ist über eine Diels-Alder-Reaktion einer Furan-Verbindung und einer cyclischen Imid-Verbindung erhältlich. Beispielsweise wird zunächst ein Furan-haltiges Polymer, das eine kovalent gebundene Furanverbindung enthält, hergestellt und anschließend erfolgt die Umsetzung des Furan-haltigen Polymers mit einer cyclischen Imidverbindung, die den funktionellen Organylrest aufweist. Alternativ ist es auch möglich, dass zunächst ein Polymer, das ein kovalent gebundenes cyclisches Imid enthält (nachfolgend auch als Imid-haltiges Polymer bezeichnet), hergestellt wird und anschließend die Umsetzung des Imid-haltigen Polymers mit einer Furanverbindung, die den funktionellen Organylrest aufweist, erfolgt.

Sofern das Diels-Alder-Addukt über seine Furan-Komponente kovalent an das Polymer gebunden ist, leitet sich die in dem Diels-Alder-Addukt vorliegende Furan-Komponente beispielsweise aus einer Furan-Verbindung ab, die folgende Formel (I) aufweist: 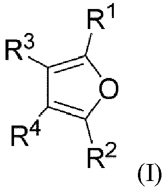 wobei die Reste R¹, R², R³ und R⁴, unabhängig voneinander, Wasserstoff, eine Alkyl- (z.B. eine C₁₋₄-Alkyl-), Amid-, Carbonyl-, Carboxyl-, Hydroxymethyl-, Thiomethyl-, Aldehyd-, Ester-, Aminomethyl-, Vinyl-, Vinylether-, Allyl-, Allylether-, eine Acrylsäure- oder C₁₋₄-Alkylacrylat-, eine Methacrylsäure- oder C₁₋₄-Alkylmethacrylat- oder eine Isocyanatomethyl-Gruppe sind, unter der Maßgabe, dass zumindest einer der Reste R¹ - R⁴ weder Wasserstoff noch Alkyl ist. Optional können die vorgenannten Reste epoxidiert sein.

Beispielsweise sind R³ und R⁴, unabhängig voneinander, Wasserstoff oder C₁₋₄-Alkyl; und R¹ und R² sind, unabhängig voneinander, eine Amid-, Carbonyl-, Carboxyl-, Hydroxymethyl-, Thiomethyl-, Aldehyd-, Ester-, Aminomethyl-, Vinyl-, Vinylether-, Allyl-, Allylether-, Acrylsäure- oder C₁₋₄-Alkylacrylat-, Methacrylsäure- oder C₁₋₄-Alkylmethacrylat- oder Isocyanatomethyl-Gruppe.

Alternativ ist es auch möglich, dass R², R³ und R⁴, unabhängig voneinander, Wasserstoff oder C₁₋₄-Alkyl sind; und R¹ eine Amid-, Carbonyl-, Carboxyl-, Hydroxymethyl-, Thiomethyl-, Aldehyd-, Ester-, Aminomethyl-, Vinyl-, Vinylether-, Allyl-, Allylether-, Acrylsäure- oder C₁₋₄-Alkylacrylat-, Methacrylsäure- oder C₁₋₄-Alkylmethacrylat- oder Isocyanatomethyl-Gruppe ist.

Bevorzugte Furanverbindungen der Formel (I) sind Furfural, Furfurylalkohol, Furfurylamin, Furfurylthiol, Hydroxymethylfurfural, 2,5-Bishydroxymethylfuran, 2,5-Bisaminomethylfuran, 2,5-Furandicarbonsäure, 2-Carboxy-5-Hydroxymethylfuransäure, Furan-2-carbonsäure, Furfurylacrylat und Furfurylmethacrylat. Besonders bevorzugt sind Furanverbindungen ohne Carbonyl-Kohlenstoff in alpha-Position zum Furan-Ring.

Diese Furanverbindungen sind kommerziell erhältlich oder lassen sich über Syntheseverfahren, die dem Fachmann bekannt sind, herstellen.

Sofern das Diels-Alder-Addukt über seine Furan-Komponente kovalent an das Polymer gebunden ist, leitet sich die in dem Diels-Alder-Addukt vorliegende cyclische Imid-Komponente bevorzugt aus einer cyclischen Imidverbindung mit einem funktionellen Organylrest R⁵ ab, die die folgende Formel (II) aufweist: 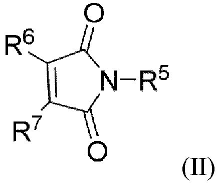 wobei
R⁶ und R⁷, unabhängig voneinander, Wasserstoff oder C₁₋₄-Alkyl sind;
der funktionelle Organylrest R⁵ eine quartäre Ammoniumgruppe (z.B. -[N(C₁₋₂-Alkyl)₃]⁺), eine Carbonsäure- oder Carboxylatgruppe (d.h. -COOH oder -COO⁻), eine Sulfonamidgruppe (z.B. -SO₂-NH-R, wobei R C₁₋₄-Alkyl, bevorzugter C₁₋₂-Alkyl, oder Benzyl ist), eine Amingruppe, eine Hydroxylgruppe, oder eine Kombination von mindestens zwei dieser Gruppen enthält oder ein C₂₋₂₂-Alkylrest ist.

In einer bevorzugten Ausführungsform sind R⁶ und R⁷ Wasserstoff, d.h. bei der cyclischen Imidverbindung handelt es sich um eine Maleimidverbindung und das Diels-Alder-Addukt enthält folglich eine Maleimid-Komponente. Gemäß einer weiteren bevorzugten Ausführungsform ist R⁶ Wasserstoff und R⁷ ist Methyl, d.h. bei der cyclischen Imidverbindung handelt es sich um eine Citraconimidverbindung und das Diels-Alder-Addukt enthält folglich eine Citraconimid-Komponente.

Die oben genannten Gruppen des funktionellen Organylrests R⁵ können über eine bivalente Linkereinheit oder auch direkt an das Stickstoffatom der Imidgruppe gebunden sein. Die bivalente Linkereinheit ist beispielsweise

-(C₁₋₁₀-Alkylen)ₐ-(Phenylen)_{b}-(C₁₋₁₀-Alkylen)_{c}-

wobei a 0 oder 1 ist, b 0 oder 1 ist, c 0 oder 1 ist, unter der Maßgabe, dass a+b+c ≥ 1 ist. Die C₁₋₄-Alkylen- und Phenylen-Gruppen können substituiert oder unsubstituiert sein. Optional kann die C₁₋₁₀-Alkylen-Gruppe durch ein oder mehrere Heteroatome (z.B. ein Sauerstoffatom) oder mindestens eine funktionelle Gruppe (z.B. eine Ester- oder Amid-Gruppe) unterbrochen sein.

Der funktionelle Organylrest R⁵ der cyclischen Imidverbindung der Formel (II) ist beispielsweise einer der folgenden Reste:
- Ein C₂₋₂₂-Alkylrest (d.h. -CₙH₂ₙ₊₁, wobei n=2-22), bevorzugter ein C₁₂₋₂₂-Alkylrest, noch bevorzugter ein C₁₄₋₁₈-Alkylrest (d.h. -CₙH₂ₙ₊₁, wobei n=12-22, noch bevorzugter n=14-18 ist), wobei der Alkylrest linear oder verzweigt sein kann;
- ein Rest der folgenden chemischen Formel:

   -CₙH₂ₙ-X

   wobei
   n 1-18, bevorzugter 1-7 ist und
   X eine Amin-, Ammonium-, Hydroxyl-, Carbonsäure- oder Carboxylat-Gruppe ist;
- ein Rest der folgenden chemischen Formel:

   -CₙH₂ₙ-[N(C₁₋₂-Alkyl)₃]⁺

   wobei
   n 1-9, bevorzugter 1-5 ist;
- ein Rest der folgenden chemischen Formel:

   -(L)ₘ-SO₂-NH-R

   wobei
   R C₁₋₄-Alkyl, bevorzugter C₁₋₂-Alkyl, oder Benzyl ist,
   L eine bivalente Linkereinheit ist, die folgende Formel aufweist:

      -(C₁₋₁₀-Alkylen)ₐ-(Phenylen)_{b}-(C₁₋₁₀-Alkylen)_{c}-

      wobei a 0 oder 1 ist, b 0 oder 1 ist, c 0 oder 1 ist, unter der Maßgabe, dass a+b+c ≥ 1 ist, und
      m 0 oder 1 ist.

Die C₁₋₄-Alkylen- und Phenylen-Gruppen der bivalenten Linkereinheit L können substituiert oder unsubstituiert sein. Optional kann die C₁₋₁₀-Alkylen-Gruppe durch ein oder mehrere Heteroatome (z.B. ein Sauerstoffatom) oder mindestens eine funktionelle Gruppe (z.B. eine Ester- oder Amid-Gruppe) unterbrochen sein. Sofern vorhanden, ist die bivalente Linkereinheit L beispielsweise eine C₁₋₁₈, bevorzugter eine C₁₋₆-Alkylengruppe.

Diese cyclischen Imidverbindungen mit einem funktionellen Organylrest sind kommerziell erhältlich oder lassen sich über Syntheseverfahren, die dem Fachmann bekannt sind, herstellen.

Beispielsweise wird ein Säureanhydrid (z.B. Maleinsäureanhydrid) mit einem Amin, das den funktionellen Organylrest enthält, zum cyclischen Imid umgesetzt (Methode I). Optional ist es auch möglich, dass das Amin eine Vorstufe des funktionellen Organylrests enthält und diese Vorstufe erst nach der Herstellung des cyclischen Imids in den funktionellen Organylrest überführt wird. Die Methode I wird in dem folgenden Reaktionsschema veranschaulicht:

### Methode I:

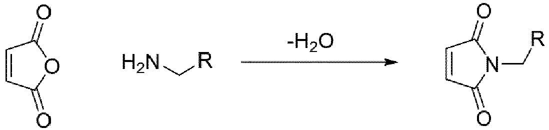

Alternativ kann von einem cyclischen Imid (z.B. einem Maleimid oder Citraconimid), an dessen Imid-Stickstoff ein Wasserstoff gebunden ist, ausgegangen werden. Durch Substitution des Wasserstoffs (z.B. über eine Reaktion mit einer halogenierten Verbindung) wird der funktionelle Organylrest eingeführt (Methode II). Dies wird in dem folgenden Reaktionsschema veranschaulicht:

### Methode II:

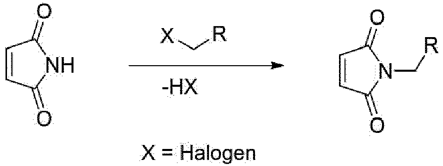

Gemäß einer weiteren Variante wird beispielsweise zuerst ein cyclisches Imid hergestellt, das einen Rest mit einer reaktiven Kopplungsstelle aufweist. Dieser Rest stellt eine Vorstufe des funktionellen Organylrests dar. In einem weiteren Schritt wird die reaktive Kopplungsstelle mit einer weiteren Verbindung umgesetzt, so dass der funktionelle Organylrest erhalten wird. Dies wird in dem folgenden Reaktionsschema veranschaulicht:

### Methode III:

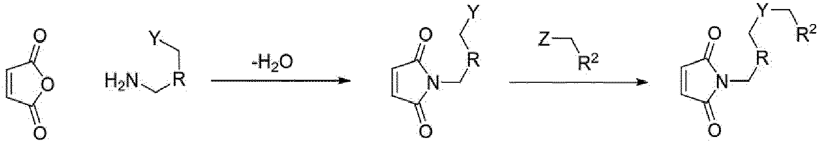

Die vorliegende Erfindung betrifft weiterhin ein Verfahren zur Herstellung des oben beschriebenen funktionalisierten Polymers, wobei
(a1) ein Furan-haltiges Polymer, das eine kovalent gebundene Furanverbindung enthält, hergestellt wird,
(a2) die kovalent an das Furan-haltige Polymer gebundene Furanverbindung in einer Diels-Alder-Reaktion mit einer cyclischen Imidverbindung, die einen funktionellen Organylrest mit einer Molmasse von weniger als 800 g/mol oder eine Vorstufe dieses funktionellen Organylrests aufweist, umgesetzt wird.

Alternativ betrifft die vorliegende Erfindung ein Verfahren zur Herstellung des oben beschriebenen funktionalisierten Polymers, wobei
(b1) ein Imid-haltiges Polymer, das eine kovalent gebundene cyclische Imidverbindung enthält, hergestellt wird,
(b2) die kovalent an das Imid-haltige Polymer gebundene cyclische Imidverbindung in einer Diels-Alder-Reaktion mit einer Furanverbindung, die einen funktionellen Organylrest mit einer Molmasse von weniger als 800 g/mol oder eine Vorstufe dieses funktionellen Organylrests aufweist, umgesetzt wird.

Hinsichtlich geeigneter Furan- und cyclischer Imidverbindungen und bevorzugter funktioneller Organylreste kann auf die obigen Ausführungen (z.B. die Furanverbindungen der Formel (I) und die cyclische Imidverbindungen der Formel (II)) verwiesen werden.

Wie oben erwähnt, ist das funktionalisierte Polymer bevorzugt ein Polyacrylat, ein Polymethacrylat, ein Polyester, ein Polyurethan, ein Polyharnstoff, ein Polyamid, ein Polyesteramid oder ein Polyether. Folglich handelt es sich bei dem Furan-haltigen Polymer in Schritt (a1) oder dem Imid-haltigen Polymer in Schritt (b1) ebenfalls bevorzugt um ein Polyacrylat, ein Polymethacrylat, einen Polyester, ein Polyurethan, einen Polyharnstoff, ein Polyamid, ein Polyesteramid oder einen Polyether.

Der Einbau bzw. die Anbindung der Furanverbindung in die Polymere kann nach gängigen Syntheseverfahren erfolgen und ist abhängig von der chemischen Natur der Reste am Furanring. Beispielsweise können 2,5-Bishydroxymethylfuran, 2,5-Bisaminomethylfuran oder 2,5-Furandicarbonsäure in Polykondensationen zusammen mit anderen Disäuren, Säureanhydriden, Dimethylestern, Diolen, Diaminen oder ähnlichen Verbindungen entsprechend zu Polyestern, Polyamiden, Polyesteramiden oder Polyethern umgesetzt werden. Mit Diisocyanaten ist die Herstellung von Polyurethanen oder Polyharnstoffen über Polyadditionen möglich. Furanverbindungen, bei denen einer der beiden Reste R¹ oder R² ein H oder eine Alkyl-Gruppe (z. B. Methyl, Ethyl oder Propyl) ist, während der andere Rest eine reaktive Gruppe enthält, können nach gängigen Verfahren entweder via End-capping oder als Seitenketten an die Polymere angebunden werden.

Die Herstellung des Furan-haltigen Polymers in Schritt (a1) erfolgt beispielsweise, indem zunächst ein Ausgangspolymer, das reaktive Gruppen aufweist, mit einer Furanverbindung umgesetzt wird. Durch Reaktion der Furanverbindung mit den reaktiven Gruppen des Ausgangspolymers wird die Furanverbindung kovalent an das Polymer gebunden. Die reaktiven Gruppen des Ausgangspolymers können in terminaler Position (endständig) und/oder in der Polymerkette verteilt vorliegen. Die reaktive Gruppe ist beispielsweise eine ungesättigte Bindung (z.B. eine C=C-Bindung) oder eine funktionelle Gruppe wie Isocyanat (-NCO), Hydroxyl oder Carboxyl. Alternativ kann die Herstellung des Furan-haltigen Polymers in Schritt (a1) erfolgen, indem eine Furanverbindung als Monomer, optional in Kombination mit weiteren Monomeren, bei der Polymerisation verwendet wird.

Die Herstellung des Furan-haltigen Polymers in Schritt (a1) kann beispielsweise erfolgen, indem ein Ausgangspolymer, das endständig reaktive Gruppen (z.B. NCO-Gruppen) aufweist, mit einer Furanverbindung umgesetzt wird, so dass das Furan-haltige Polymer die kovalent gebundene Furanverbindung in endständiger (d.h. terminaler) Position enthält. Das Ausgangspolymer mit endständigen reaktiven Gruppen ist beispielsweise ein NCO-terminiertes Polyurethan. Dieses Ausgangspolymer kann erhalten werden, indem eine oder mehrere OH-haltige Komponenten (z.B. ein Polyesterpolyol, ein Polyetherpolyol, ein monomeres Diol oder ein Triol oder eine Kombination aus mindestens zwei dieser Verbindungen) mit einem oder mehreren Diisocyanaten umgesetzt werden. Das NCO:OH-Verhältnis beträgt beispielsweise 1,05-2,0, bevorzugter 1,5-1,8. Bei dem Ausgangspolymer mit endständigen reaktiven Gruppen kann es sich auch um einen Polyester oder einen Polyether handeln.

Hinsichtlich geeigneter Furanverbindungen, die mit den reaktiven terminalen Gruppen des Ausgangspolymers umgesetzt und so in terminaler Position kovalent an das Polymer gebunden werden können, kann auf die obigen Ausführungen (z.B. die Furanverbindungen der Formel (I)) verwiesen werden. Beispielsweise ist die Furanverbindung Furfurylalkohol oder Furfurylamin.

Alternativ kann die Herstellung des Furan-haltigen Polymers in Schritt (a1) erfolgen, indem ein Ausgangspolymer, das reaktive (z.B. ungesättigte) Monomereinheiten enthält, mit einer Furanverbindung umgesetzt wird, so dass die Furanverbindung durch Reaktion mit den reaktiven Monomereinheiten kovalent an das Polymer gebunden wird. Die Furanverbindung wird dadurch über Seitenketten an das Polymer gebunden. Hinsichtlich geeigneter Furanverbindungen kann auf die obigen Ausführungen (z.B. die Furanverbindungen der Formel (I)) verwiesen werden. Beispielsweise wird als Ausgangspolymer ein ungesättigter Polyester hergestellt, z.B. durch Umsetzung von Diolen mit einer ungesättigten (bevorzugt nichtaromatischen) Dicarbonsäure wie Fumarsäure, Maleinsäure, Itaconsäure oder einer Mischung von mindestens zwei dieser Dicarbonsäuren. Optional können dabei zusätzlich gesättigte oder aromatische Dicarbonsäuren eingesetzt werden. Anschließend wird entsprechend des molaren Anteils der ungesättigten Carbonsäuren eine geeignete Furanverbindung (z.B. Furfurylamin, Furfurylthiol oder Derivate hiervon) zugesetzt, welche über eine Michael-Addition an das Polymer addiert wird.

Alternativ kann die Herstellung des Furan-haltigen Polymers in Schritt (a1) erfolgen, indem eine Furanverbindung als Monomer für die Polymerisation eingesetzt wird, optional in Kombination mit einer oder mehreren zusätzlichen Monomerverbindungen. Wird eine bifunktionelle Furanverbindung wie z.B. 2,5-Bishydroxymethylfuran zusammen mit weiteren bi- oder multifunktionellen Verbindungen (z.B. Dicarbonsäuren oder weiteren Diolen) polymerisiert, so wird die Furanverbindung direkt in die Polymerkette eingebaut. Alternativ kann die Furanverbindung auch über Seitenketten an das Polymer gebunden sein. Hinsichtlich geeigneter Furanverbindungen kann auf die obigen Ausführungen (z.B. die Furanverbindungen der Formel (I)) verwiesen werden.

Beispielsweise wird ein (meth)acrylierter Furfurylalkohol (z.B. Furfurylacrylat oder Furfurylmethacrylat) mit einem oder mehreren anderen Acrylaten und/oder Methacrylaten wie Butylacrylat (BA) oder Methylmethacrylat (MMA) zu Poly(meth)acrylaten polymerisiert. Die Polymerisation kann beispielsweise in Anwesenheit eines geeigneten Initiators für eine radikalische Polymerisation (z.B. Azobisisobutyronitril (AIBN)) erfolgen. Der Anteil an (meth)acryliertem Furfurylalkohol beträgt 5-100%, bevorzugt 20-50%. Über die radikalische Polymerisation der Doppelbindungen wird dann die Polymerhauptkette aufgebaut. Die als Ester gebundenen Furfuryleinheiten sind als Seitenketten an die Hauptkette des Polymers angebunden. Zur Initiierung der radikalischen Polymersiation können auch die allgemein bekannten Verfahren ATRP, RAFT oder NMRP angewendet werden.

Ein direkter Einbau der Furanverbindung in die Polymerkette erfolgt beispielsweise, wenn 2,5-Bishydroxymethylfuran (BHMF) mit weiteren Diolen und Disäuren zu einem Polyester-Polyol umgesetzt wird. Der Anteil an BHMF beträgt bevorzugt 10-100 mol%, bevorzugter 30-60 mol%, bezogen auf die Diolkomponenten. Das OH:COOH-Verhältnis beträgt bevorzugt 1,0-1,9, bevorzugter 1,1-1,4.

In einer weiteren beispielhaften Ausführungsform erfolgt ein direkter Einbau der Furanverbindung in die Polymerkette, wenn 2,5-Bisaminomethylfuran (BAMF) mit weiteren Diaminen und Disäuren zu einem Polyamid umgesetzt wird. Der Anteil an BAMF beträgt bevorzugt 10-100 mol%, bevorzugter 30-60 mol%, bezogen auf die Diaminkomponenten. Das NH₂:COOH-Verhältnis beträgt bevorzugt 1,0-1,9, bevorzugter 1,05-1,2.

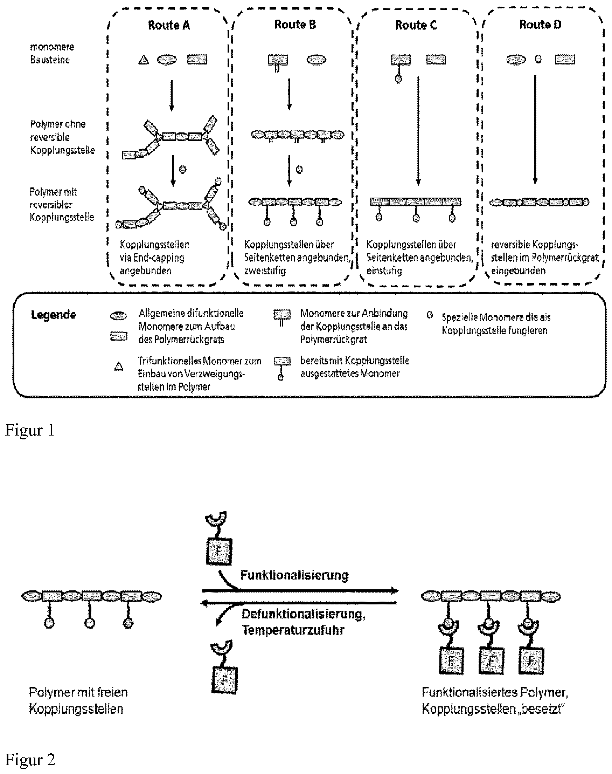

In Figur 1 werden die oben beschriebenen Synthesevarianten für das Furan-haltige Polymer nochmals veranschaulicht.

Gemäß Route A der Figur 1 wird zunächst ein Ausgangspolymer mit endständigen reaktiven Gruppen hergestellt, anschließend wird die Furanverbindung durch Reaktion mit diesen endständigen Gruppen kovalent an das Polymer gebunden. In Figur 1 ist das Ausgangspolymer der Route A verzweigt. Im Rahmen der vorliegenden Erfindung kann aber auch ein lineares Ausgangspolymer verwendet werden.

Gemäß Route B der Figur 1 wird ein Ausgangspolymer, das reaktive Monomereinheiten enthält, hergestellt (z.B. ein ungesättigter Polyester). Durch Reaktion der Furanverbindung mit diesen reaktiven Monomereinheiten erfolgt die kovalente Anbindung über Seitenketten.

Sowohl gemäß Route C wie auch Route D wird eine Furanverbindung als Monomer für die Polymerisation eingesetzt. In Route C ist der Furanring über Seitenketten an die Polymerhauptkette gebunden, während in Route D die Furanverbindung direkt in die Polymerkette eingebunden ist.

Diese Synthesevarianten können nicht nur für die Herstellung des Furan-haltigen Polymers, sondern auch für die Herstellung des Imid-haltigen Polymers verwendet werden.

Wie oben erwähnt, wird in Schritt (a2) die kovalent an das Furan-haltige Polymer gebundene Furanverbindung in einer Diels-Alder-Reaktion mit einer cyclischen Imidverbindung, die einen funktionellen Organylrest mit einer Molmasse von weniger als 800 g/mol oder eine Vorstufe dieses funktionellen Organylrests aufweist, umgesetzt.

Hinsichtlich geeigneter cyclischer Imidverbindungen kann auf die obigen Ausführungen verwiesen werden (z.B. die cyclischen Imidverbindungen der Formel (II)).

Geeignete Verfahrensbedingungen für Diels-Alder-Reaktionen sind dem Fachmann bekannt.

Die Umsetzung in Schritt (a2) erfolgt bevorzugt bei einer Temperatur im Bereich von 40°C bis 80°C.

Die Umsetzung in Schritt (a2) kann beispielsweise in einer Lösung, in der das Furan-haltige Polymer und die cyclische Imidverbindung gelöst vorliegen, durchgeführt werden.

Alternativ ist es auch möglich, dass das Furan-haltige Polymer in Schritt (a2) als Feststoff (z.B. in Form einer Beschichtung auf einem Substrat) eingesetzt wird und dessen Oberfläche mit einer Lösung, die die cyclische Imidverbindung enthält, in Kontakt gebracht wird (z.B. durch Besprühen). Dies ermöglicht, dass die Bildung des funktionalisierten Polymers im Wesentlichen nur an der Oberfläche des polymeren Werkstoffs erfolgt.

Die Umsetzung des Furan-haltigen Polymers mit der cyclischen Imidverbindung (z.B. einer Maleimidverbindung), die den funktionellen Organylrest aufweist, wird in Figur 2 veranschaulicht. Die linke Seite der Reaktionsgleichung zeigt das Furan-haltige Polymer, wobei die Furanverbindung über Seitenketten kovalent an die Polymerkette gebunden ist ("Polymer mit freien Kopplungsstellen"). Dieses Polymer wird mit der cyclischen Imidverbindung, die den funktionellen Organylrest ("F") trägt, in Kontakt gebracht. Über eine Diels-Alder-Reaktion werden die Furanverbindung und die cyclische Imidverbindung zu einem Diels-Alder-Addukt umgesetzt. Die Diels-Alder-Addukte sind über die Seitenketten kovalent an das funktionalisierte Polymer gebunden. Bei entsprechender Temperaturerhöhung wird die den funktionellen Organylrest F tragende Maleimidverbindung vom Polymer abgespalten.

Wird zunächst ein Imid-haltiges Polymer hergestellt (Schritt (b1)), so erfolgt in Schritt (b2) die Umsetzung der kovalent an das Imid-haltige Polymer gebundenen cyclischen Imidverbindung in einer Diels-Alder-Reaktion mit einer Furanverbindung, die den funktionellen Organylrest mit einer Molmasse von weniger als 800 g/mol oder eine Vorstufe dieses funktionellen Organylrests enthält.

Geeignete Verfahrensbedingungen für Diels-Alder-Reaktionen sind dem Fachmann bekannt.

Die Umsetzung in Schritt (b2) erfolgt bevorzugt bei einer Temperatur im Bereich von 40 °C bis 80 °C.

Die Umsetzung in Schritt (b2) kann beispielsweise in einer Lösung, in der das Imid-haltige Polymer und die Furanverbindung gelöst vorliegen, durchgeführt werden.

Alternativ ist es auch möglich, dass das Imid-haltige Polymer in Schritt (b2) als Feststoff (z.B. in Form einer Beschichtung auf einem Substrat) eingesetzt wird und dessen Oberfläche mit einer Lösung, die die Furanverbindung enthält, in Kontakt gebracht wird (z.B. durch Besprühen). Dies ermöglicht, dass die Bildung des funktionalisierten Polymers im Wesentlichen nur an der Oberfläche des polymeren Werkstoffs erfolgt.

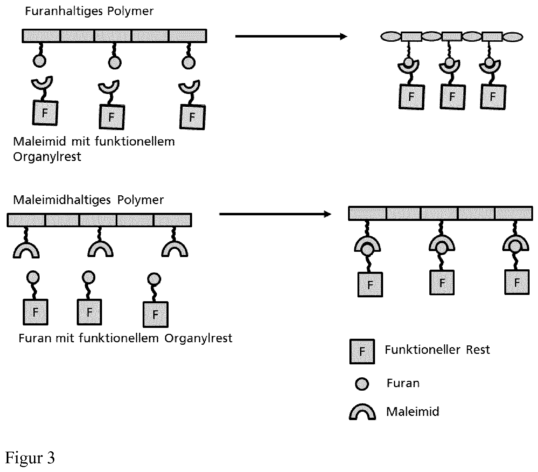

Die Umsetzung eines Furan-haltigen Polymers mit einer cyclischen Imidverbindung, die den funktionellen Organylrest enthält, sowie die Umsetzung eines Imid-haltigen (z.B. Maleimid-haltigen Polymers) mit einer Furanverbindung, die den funktionellen Organylrest enthält, werden in Figur 3 nochmals veranschaulicht.

Die vorliegende Erfindung betrifft weiterhin ein funktionalisiertes Polymer, das nach den oben beschriebenen Verfahren erhältlich ist.

Weiterhin betrifft die vorliegende Erfindung einen Werkstoff, der das oben beschriebene funktionalisierte Polymer enthält.

Der Werkstoff ist beispielsweise ein Organoblech, ein Klebstoff, eine Beschichtung, ein Verpackungsmaterial, ein Verbundwerkstoff (z.B. ein Metall-Kunststoff- oder Holz-Kunststoff-Verbundwerkstoff) oder ein Hybridbauteil (z.B. ein Kunststoff-Metall-Hybridbauteil).

Weiterhin betrifft die vorliegende Erfindung die Verwendung des oben beschriebenen Polymers als Biozid.

Die Erfindung wird anhand der nachfolgenden Beispiele eingehender beschrieben.

### Beispiele

### Beispiel 1: Herstellung eines funktionalisierten Polyurethans

Folgende OH-funktionellen Verbindungen wurden mit folgendem Diisocyanat unter den nachfolgend genannten Bedingungen zu einem NCO-terminierten Polyurethan umgesetzt.

61,78 g Polypropylenglykol 1000, 2,12 g Trimethylolpropan und 36,14 g Methylendiphenylisocyanat (MDI) wurden bei 95 °C für 2 h zu einem NCO-terminierten Polyurethan umgesetzt. Katalysator: 0,06 m% Borchikat^{®} 0244.

Dieses Ausgangspolymer mit terminalen NCO-Gruppen wurde mit Furfurylalkohol unter folgenden Bedingungen umgesetzt:
Zu 100g des NCO-terminierten Ausgangspolymer wurden 11,80 g Furfurylalkohol zugesetzt und bei 95 °C für weitere 2 h gerührt.

Es wurde ein Furan-haltiges Polymer erhalten, das endständig die kovalent gebundene Furanverbindung aufwies.

Das Furan-haltige Polymer wurde mit der folgenden cyclischen Imidverbindung unter den nachfolgend genannten Bedingungen umgesetzt:
Das furanhaltige Polymer wurden mit N-Octadecyl-Maleimid (d.h. einem cyclischen Imid, das -C₁₈H₃₇ als funktionellen Organylrest enthält) bei 100 °C in Schmelze umgesetzt. Das Verhältnis Furan:Maleimid betrug 1 : 0,8.

Es wurde ein funktionalisiertes Polyurethan erhalten, das in terminaler Position die Diels-Alder-Addukte aufwies.

### Beispiel 2: Herstellung eines funktionalisierten Polymethacrylats

Furfurylmethacrylat wurde zusammen mit den folgenden (Meth)acrylaten unter den nachfolgend beschriebenen Bedingungen zu einem Polymethacrylat polymerisiert: Methylmethacrylat und Furfurylmethacrylat wurden im molaren Verhältnis von 70:30 in Toluol gelöst. Es wurden 0,1 m% AIBN als Initiator zugegeben und für 4 h bei 90 °C gerührt.

Das Furan-haltige Polymethacrylat wurde mit der folgenden cyclischen Imidverbindung unter den nachfolgend genannten Bedingungen umgesetzt:
Das furanhaltige Polymer wurde in Toluol gelöst und mit N-Octadecyl-Maleimid (d.h. einem cyclischen Imid, das -C₁₈H₃₇ als funktionellen Organylrest enthält) bei 90 °C umgesetzt. Das Verhältnis Furan:Maleimid betrug 1 : 0,9.

Es wurde ein funktionalisiertes Polymethacrylat erhalten, wobei die Diels-Alder-Addukte über Seitenketten an die Polymerkette gebunden sind.

Durch den funktionellen Organylrest der cyclischen Imid-Komponente des Diels-Alder-Addukts konnte das Polymer gezielt einer hydrophoben Wirkung versehen werden. Wenn anstelle des hydrophoben Organylrests beispielsweise ein biozider oder hydrophiler Organylrest verwendet wird, kann ein funktionalisiertes Polymer mit bioziden oder hydrophilen Eigenschaften erhalten werden.

Da das den funktionellen Organylrest aufweisende Diels-Alder-Addukt kovalent an das Polymer gebunden ist, wird eine unkontrollierte Freisetzung von Additiven vermieden. Andererseits lässt sich das Diels-Alder-Addukt bei Bedarf, z.B. beim Recycling des Polymers, thermisch spalten. Durch diese kontrolliert ablaufende Spaltung des Diels-Alder-Addukts kann die den funktionellen Organylrest tragende Komponente (die Furan- oder die cyclische Imid-Komponente) vom Polymer abgelöst werden. Das Polymerrückgrat bleibt hierbei erhalten und enthält weiterhin eine kovalent gebundene Furan- oder cyclische Imid-Komponente. Durch eine Diels-Alder-Reaktion dieser verbliebenen Komponente (z.B. der Furan-Komponente) mit dem geeigneten Reaktionspartner (z.B. einer Maleimid-Verbindung mit funktionellem Organylrest) kann erneut funktionalisiert werden.

## Patentansprüche

1. Funktionalisiertes Polymer, das mindestens ein kovalent gebundenes Diels-Alder-Addukt enthält, wobei das Diels-Alder-Addukt eine Furan- und eine cyclische Imid-Komponente aufweist und die Furan- oder die cyclische Imid-Komponente einen funktionellen Organylrest, dessen Molmasse weniger als 800 g/mol beträgt, enthält, wobei
der funktionelle Organylrest eine quartäre Ammonium-, eine Carbonsäure- oder Carboxylat-, eine Sulfonamid-, eine Hydroxyl- oder eine Amin-Gruppe enthält oder ein C₂₋₂₂-Alkylrest ist,
das Diels-Alder-Addukt über die Furan-Komponente kovalent an das Polymer gebunden ist und die cyclische Imid-Komponente den funktionellen Organylrest enthält; oder
das Diels-Alder-Addukt über die cyclische Imid-Komponente kovalent an das Polymer gebunden ist und die Furan-Komponente den funktionellen Organylrest enthält.

2. Polymer gemäß Anspruch 1, wobei die Gruppe direkt oder über eine bivalente Linkereinheit an das Imid-Stickstoffatom der cyclischen Imid-Komponente oder an ein Kohlenstoffatom des Furanrings der Furan-Komponente gebunden ist.

3. Polymer gemäß Anspruch 2, wobei die bivalente Linkereinheit folgende Struktur aufweist:
-(C₁₋₁₀-Alkylen)ₐ-(Phenylen)_{b}-(C₁₋₁₀-Alkylen)_{c}-
wobei a 0 oder 1 ist, b 0 oder 1 ist, c 0 oder 1 ist, unter der Maßgabe, dass a+b+c ≥ 1 ist; und optional die C₁₋₁₀-Alkylen-Gruppe durch ein oder mehrere Heteroatome oder mindestens eine funktionelle Gruppe unterbrochen sein kann.

4. Polymer gemäß einem der vorstehenden Ansprüche, wobei der funktionelle Organylrest einer der folgenden Reste ist:
- ein Alkylrest -CₙH₂ₙ₊₁, wobei n=12-22,
- ein Rest der folgenden chemischen Formel:
-CₙH₂ₙ-X
wobei
n = 1-18, bevorzugter 1-7 ist und
X eine Amin-, Ammonium-, Hydroxyl-, Carbonsäure- oder Carboxylat-Gruppe ist;
- ein Rest der folgenden chemischen Formel:
-CₙH₂ₙ-[N(C₁₋₂-Alkyl)₃]⁺
wobei
n 1-9, bevorzugter 1-5 ist;
- ein Rest der folgenden chemischen Formel:
-(L)ₘ-SO₂-NH-R
wobei
R C₁₋₄-Alkyl, bevorzugter C₁₋₂-Alkyl, oder Benzyl ist,
L eine bivalente Linkereinheit, bevorzugt die bivalente Linkereinheit nach Anspruch 3, ist.

5. Polymer gemäß einem der vorstehenden Ansprüche, wobei die cyclische Imid-Komponente eine Maleimid-Komponente oder eine Citraconimid-Komponente ist.

6. Polymer gemäß einem der vorstehenden Ansprüche, wobei das Diels-Alder-Addukt in terminaler Position des Polymers und/oder durch Seitenketten an das Polymer gebunden ist oder über seine Furan-Komponente direkt in die Polymerkette eingebaut ist.

7. Polymer gemäß einem der vorstehenden Ansprüche, wobei das Polymer ein Polyacrylat, ein Polymethacrylat, ein Polyester, ein Polyurethan, ein Polyharnstoff, ein Polyamid, ein Polyesteramid oder ein Polyether ist.

8. Verfahren zur Herstellung des funktionalisierten Polymers nach einem der Ansprüche 1-7, wobei
(a1) ein Furan-haltiges Polymer, das eine kovalent gebundene Furanverbindung enthält, hergestellt wird,
(a2) die kovalent an das Furan-haltige Polymer gebundene Furanverbindung in einer Diels-Alder-Reaktion mit einer cyclischen Imidverbindung, die einen funktionellen Organylrest mit einer Molmasse von weniger als 800 g/mol oder eine Vorstufe dieses funktionellen Organylrests aufweist, umgesetzt wird.

9. Verfahren nach Anspruch 8, wobei die Herstellung des Furan-haltigen Polymers in Schritt (a1) erfolgt, indem ein Ausgangspolymer, das reaktive Gruppen aufweist, mit einer Furanverbindung umgesetzt wird; oder das Furan-haltige Polymer in Schritt (a1) durch eine Polymerisation unter Verwendung einer Furanverbindung als Monomer erhalten wird.

10. Verfahren zur Herstellung des funktionalisierten Polymers nach einem der Ansprüche 1-7, wobei
(b1) ein Imid-haltiges Polymer, das eine kovalent gebundene cyclische Imidverbindung enthält, hergestellt wird,
(b2) die kovalent an das Imid-haltige Polymer gebundene cyclische Imidverbindung in einer Diels-Alder-Reaktion mit einer Furanverbindung, die einen funktionellen Organylrest mit einer Molmasse von weniger als 800 g/mol oder eine Vorstufe dieses funktionellen Organylrests aufweist, umgesetzt wird.

11. Verfahren nach Anspruch 10, wobei die Herstellung des Imid-haltigen Polymers in Schritt (b1) erfolgt, indem ein Ausgangspolymer, das reaktive Gruppen aufweist, mit einer cyclischen Imidverbindung umgesetzt wird.

12. Verfahren nach einem der Ansprüche 8-9, wobei die cyclische Imidverbindung eine Verbindung der folgenden Formel (II) ist: 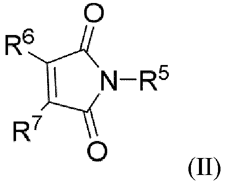 wobei
R⁶ und R⁷, unabhängig voneinander, Wasserstoff oder C₁₋₄-Alkyl sind;
R⁵ der funktionelle Organylrest ist.

13. Verfahren nach einem der Ansprüche 8-9 oder 12, wobei die Furan-Verbindung folgende Formel (I) aufweist: 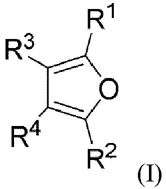 wobei die Reste R¹, R², R³ und R⁴, unabhängig voneinander, Wasserstoff, eine Alkyl-, Amid-, Carbonyl-, Carboxyl-, Hydroxymethyl-, Thiomethyl-, Aldehyd-, Ester-, Aminomethyl-, Vinyl-, Vinylether-, Allyl-, Allylether-, Thiomethyl-, Acrylsäure- oder C₁₋₄-Alkylacrylat-, Methacrylsäure- oder C₁₋₄-Alkylmethacrylat- oder Isocyanatomethyl-Gruppe sind, unter der Maßgabe, dass zumindest einer der Reste R¹ - R⁴ weder Wasserstoff noch Alkyl ist.

## Claims

1. A functionalized polymer which comprises at least one covalently bonded Diels-Alder adduct, the Diels-Alder adduct containing a furan component and a cyclic imide component, and the furan component or the cyclic imide component comprising a functional organyl radical whose molar mass is less than 800 g/mol, wherein
the functional organyl radical comprises a quaternary ammonium, a carboxylic acid or carboxylate, a sulfonamide, a hydroxyl or an amine group, or is a C₂₋₂₂ alkyl radical;
the Diels-Alder adduct is bonded covalently via the furan component to the polymer, and the cyclic imide component comprises the functional organyl radical; or
the Diels-Alder adduct is bonded covalently via the cyclic imide component to the polymer, and the furan component comprises the functional organyl radical.

2. The polymer as claimed in claim 1, wherein the group is bonded directly or via a bivalent linker unit to the imide nitrogen atom of the cyclic imide component or to a furan ring carbon atom of the furan component.

3. The polymer as claimed in claim 2, wherein the bivalent linker unit has the following structure:
-(C₁₋₁₀-alkylene)ₐ-(phenylene)_{b}-(C₁₋₁₀-alkylene)_{c}-
where a is 0 or 1, b is 0 or 1, c is 0 or 1, with the proviso that a+b+c ≥ 1 is; and the C₁₋₁₀-alkylene group may optionally be interrupted by one or more heteroatoms or at least one functional group.

4. The polymer as claimed in one of the preceding claims, wherein the functional organyl radical is one of the following radicals:
- an alkyl radical -CₙH₂ₙ₊₁, where n=12-22,
- a radical of the following chemical formula:
-CₙH₂ₙ-X
where
n = 1-18, more preferably 1-7, and
X is an amine, ammonium, hydroxyl, carboxylic acid or carboxylate group;
- a radical of the following chemical formula:
-CₙH₂ₙ-[N(C₁₋₂-alkyl)₃]⁺
where
n is 1-9, more preferably 1-5;
- a radical of the following chemical formula:
-(L)ₘ-SO₂-NH-R
where
R is C₁₋₄-alkyl, more preferably C₁₋₂-alkyl, or benzyl,
L is a divalent linker unit, preferably the divalent linker unit according to claim 3.

5. The polymer as claimed in one of the preceding claims, wherein the cyclic imide component is a maleimide component or a citraconimide component.

6. The polymer as claimed in one of the preceding claims, wherein the Diels-Alder adduct is bonded in terminal position of the polymer and/or by side chains to the polymer or is incorporated via its furan component directly in the polymer chain.

7. The polymer as claimed in one of the preceding claims, wherein the polymer is a polyacrylate, a polymethacrylate, a polyester, a polyurethane, a polyurea, a polyamide, a polyesteramide or a polyether.

8. A process for preparing the functionalized polymer as claimed in one of the claims 1-7, by
(a1) preparing a furan-containing polymer, which comprises a covalently bonded furan compound,
(a2) reacting the furan compound bonded covalently to the furan-containing polymer, in a Diels-Alder reaction, with a cyclic imide compound which contains a functional organyl radical having a molar mass of less than 800 g/mol or a precursor of this functional organyl radical.

9. The process as claimed in claim 8, wherein the furan-containing polymer is prepared in step (a1) by reacting a starting polymer which contains reactive groups with a furan compound; or the furan-containing polymer is obtained in step (a1) by a polymerization using a furan compound as monomer.

10. A process for preparing the functionalized polymer as claimed in one of the claims 1-7, by
(b1) preparing an imide-containing polymer which comprises a covalently bonded cyclic imide compound,
(b2) reacting the cyclic imide compound bonded covalently to the imide-containing polymer, in a Diels-Alder reaction, with a furan compound which contains a functional organyl radical having a molar mass of less than 800 g/mol or a precursor of this functional organyl radical.

11. The process as claimed in claim 10, wherein the imide-containing polymer is prepared in step (b1) by reacting a starting polymer containing reactive groups with a cyclic imide compound.

12. The process as claimed in one of the claims 8-9, wherein the cyclic imide compound is a compound of the following formula (II): 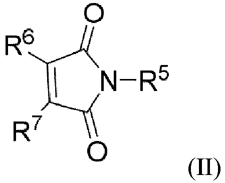 where
R⁶ and R⁷, independently of one another, are hydrogen or C₁₋₄-alkyl;
R⁵ is the functional organyl radical.

13. The process as claimed in one of the claims 8-9 or 12, wherein the furan compound has the following formula (I): 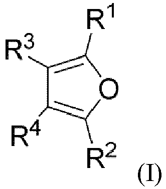 where the radicals R¹, R², R³ and R⁴, independently of one another, are hydrogen, an alkyl, amide, carbonyl, carboxyl, hydroxymethyl, thiomethyl, aldehyde, ester, aminomethyl, vinyl, vinyl ether, allyl, allyl ether, thiomethyl, acrylic acid or C₁₋₄-alkyl acrylate, methacrylic acid or C₁₋₄-alkyl methacrylate or isocyanatomethyl group, with the proviso that at least one of the radicals R¹ - R⁴ is neither hydrogen nor alkyl.

## Revendications

1. Polymère fonctionnalisé qui contient au moins un produit d'addition de Diels-Alder lié par covalence, le produit d'addition de Diels-Alder présentant un composant furanne et un composant imide cyclique et le composant furanne ou le composant imide cyclique contenant un radical organyle fonctionnel, dont la masse molaire est inférieure à 800 g/mole,
- le radical organyle fonctionnel contenant un groupe ammonium quaternaire, acide carboxylique ou carboxylate, sulfonamide, hydroxyle ou amine ou étant un radical C₂₋₂₂-alkyle,
- le produit d'addition de Diels-Alder étant lié par covalence au polymère par l'intermédiaire du composant furanne et le composant imide cyclique contenant le radical organyle fonctionnel ; ou
- le produit d'addition de Diels-Alder étant lié par covalence au polymère par l'intermédiaire du composant imide cyclique et le composant furanne contenant le radical organyle fonctionnel.

2. Polymère selon la revendication 1, le groupe étant lié directement ou par l'intermédiaire d'un motif de liaison bivalent à l'atome d'azote de la fonction imide du composant imide cyclique ou à un atome de carbone du cycle furanne du composant furanne.

3. Polymère selon la revendication 2, le motif de liaison bivalent présentant la structure suivante :
-(C₁₋₁₀-alkylène)ₐ-(phénylène)_{b}-(C₁₋₁₀-alkylène)_{c},
a valant 0 ou 1, b valant 0 ou 1, c valant 0 ou 1, sous réserve que a + b + c ≥ 1 ; et le groupe C₁₋₁₀-alkylène pouvant éventuellement être interrompu par un ou plusieurs hétéroatomes ou par au moins un groupe fonctionnel.

4. Polymère selon l'une quelconque des revendications précédentes, le groupe organyle fonctionnel étant l'un des radicaux suivants :
- un radical alkyle -CₙH₂ₙ₊₁, n = 12-22,
- un radical de la formule chimique suivante :
CₙH₂ₙ-X
dans laquelle
n = 1-18, plus préférablement 1-7 et
X représente un groupe amine, ammonium, hydroxyle, acide carboxylique ou carboxylate ;
- un radical de la formule chimique suivante :
CₙH₂ₙ-[N(C₁₋₂-alkyle)₃]⁺
dans laquelle
n vaut 1-9, plus préférablement 1-5 ;
- un radical de la formule chimique suivante :
-(L)ₘ-SO₂-NH-R
dans laquelle
R représente C₁₋₄-alkyle, plus préférablement C₁₋₂-alkyle, ou benzyle,
L représente un motif de liaison bivalent, de préférence le motif de liaison bivalent selon la revendication 3.

5. Polymère selon l'une quelconque des revendications précédentes, le composant imide cyclique étant un composant maléimide ou citraconimide.

6. Polymère selon l'une quelconque des revendications précédentes, le produit d'addition de Diels-Alder étant lié en position terminale du polymère et/ou lié par des chaînes latérales au polymère ou étant incorporé directement dans la chaîne polymère par l'intermédiaire de son composant furanne.

7. Polymère selon l'une quelconque des revendications précédentes, le polymère étant un polyacrylate, un polyméthacrylate, un polyester, un polyuréthane, une polyurée, un polyamide, un polyesteramide ou un polyéther.

8. Procédé pour la préparation du polymère fonctionnalisé selon l'une quelconque des revendications 1-7, dans lequel
(a1) on prépare un polymère contenant furanne, qui contient un composé de furanne lié par covalence,
(a2) le composé de furanne lié par covalence au polymère contenant furanne est transformé dans une réaction de Diels-Alder avec un composé d'imide cyclique, qui présente un groupe organyle fonctionnel présentant une masse molaire inférieure à 800 g/mole ou un précurseur de ce groupe organyle fonctionnel.

9. Procédé selon la revendication 8, dans lequel la préparation du polymère contenant furanne dans l'étape (a1) a lieu en ce qu'un polymère de départ, qui présente des groupes réactifs, est transformé avec un composé de furanne ; ou le polymère contenant furanne dans l'étape (a1) est obtenu par une polymérisation à l'aide d'un composé de furanne en tant que monomère.

10. Procédé pour la préparation du polymère fonctionnalisé selon l'une quelconque des revendications 1-7, dans lequel
(b1) on prépare un polymère contenant imide, qui contient un composé d'imide cyclique lié par covalence,
(b2) le composé d'imide cyclique lié par covalence au polymère contenant imide est transformé dans une réaction de Diels-Alder avec un composé de furanne, qui présente un groupe organyle fonctionnel présentant une masse molaire inférieure à 800 g/mole ou un précurseur de ce groupe organyle fonctionnel.

11. Procédé selon la revendication 10, dans lequel la préparation du polymère contenant imide dans l'étape (b1) a lieu en ce qu'un polymère de départ, qui présente des groupes réactifs, est transformé avec un composé d'imide cyclique.

12. Procédé selon l'une quelconque des revendications 8-9, dans lequel le composé d'imide cyclique est un composé de la formule (II) suivante : 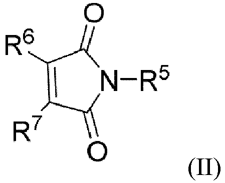 dans laquelle
R⁶ et R⁷ signifient, indépendamment l'un de l'autre hydrogène ou C₁₋₄-alkyle ;
R⁵ représente le radical organyle fonctionnel.

13. Procédé selon l'une quelconque des revendications 8-9 ou 12, le composé de furanne présentant la formule (I) suivante : 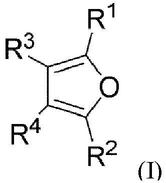 les radicaux R¹, R², R³ et R⁴ représentant, indépendamment les uns des autres, hydrogène, un groupe alkyle, amide, carbonyle, carboxyle, hydroxyméthyle, thiométhyle, aldéhyde, ester, aminométhyle, vinyle, vinyléther, allyle, allyléther, thiométhyle, acide acrylique ou acrylate de C₁₋₄-alkyle, acide méthacrylique ou méthacrylate de C₁₋₄-alkyle ou isocyanatométhyle, sous la réserve qu'au moins l'un des radicaux R¹-R⁴ ne représente ni hydrogène ni alkyle.
